# NEW EUROPEAN PATENT SPECIFICATION

(11) **EP 2 578 452 B2**
(45) Date of publication and mention of the opposition decision: **16.10.2024**
(45) Mention of the grant of the patent: 28.11.2018
(21) Application number: 12187375.6
(22) Date of filing: 05.10.2012
(51) Int. Cl.: B60Q 1/08, B60Q 1/18

(54) **Vehicle spot lamp control device and vehicle spot lamp system**
Steuergerät für eine Fahrzeuglampe und Fahrzeuglampesystem
Dispositif de commande d'une lampe de véhicule et système pour une lampe de véhicule

(30) Priority: 06.10.2011 JP 2011221890
(43) Date of publication of application: 10.04.2013
(73) Proprietor: Koito Manufacturing Co., Ltd., Tokyo 108-8711 (JP)
(72) Inventor: Masuda, Takeshi, Shizuoka-shi, Shizuoka (JP); Inoue, Takashi, Shizuoka-shi, Shizuoka (JP); Yamamura, Satoshi, Shizuoka-shi, Shizuoka (JP); Mochizuki, Mitsuyuki, Shizuoka-shi, Shizuoka (JP); Kitazawa, Yukiko, Shizuoka-shi, Shizuoka (JP)
(74) Representative: Cabinet Beau de Loménie

(56) References cited:
- EP-A1- 2 280 214
- EP-A2- 1 270 324
- EP-A2- 1 970 249
- WO-A1-03/106219
- WO-A2-2011/010247
- DE-A1- 102009 035 327
- JP-A- 2004 185 105
- JP-A- 2006 021 631
- US-A1- 2008 175 012
- US-B1- 6 281 806

## Description

### BACKGROUND OF THE INVENTION

### Technical Field

The present invention relates to a vehicle spot lamp control device and a vehicle spot lamp system, and more particularly, to a vehicle spot lamp control device and a vehicle spot lamp system that are suitable for an emission of light to the position of an object of which the collision with a vehicle should be avoided.

### Background Art

In the past, there has been known an irradiation device that acquires the position of an object such as a pedestrian, of which the collision with a vehicle should be avoided, using an image taken by a camera taking an image of a region in front of the vehicle, and irradiates the object with light to make a driver recognize the presence of the object (for example, see JP-A-2006-21631 and JP-A-2010-36835).

According to a technique disclosed in JP-A-2006-21631 and JP-A-2010-36835, it is possible to more easily avoid collision risk by making a driver recognize the position of a pedestrian. However, there is a case where it is necessary to make a driver strongly recognize the presence of an object to quickly avoid a collision, such as a case where a distance between a pedestrian and a vehicle is relatively short. For this reason, there is a demand for the development of a technique that can make a driver more appropriately recognize the presence of an object of which the collision with a vehicle should be avoided. US 6,281,806 B1 discloses a vehicle spot lamp system according to the preamble of claim 1.

### SUMMARY OF THE INVENTION

Accordingly, the invention has been made to solve the above-mentioned problem, and an object of the invention is to make a driver appropriately recognize the presence of an object of which the collision with a vehicle should be avoided.

According to one or more aspects of the present invention, there is provided a vehicle spot lamp control system according to claim 1. In this vehicle spot lamp control system, a vehicle spot lamp control device comprises: an object position acquisition section configured to acquire a position of an object existing in front of a vehicle; and a lighting controller configured to control a light irradiation of a vehicle spot lamp to be mounted in the vehicle, wherein the vehicle spot lamp is configured to emit light toward a front area of the vehicle and to change a light irradiation direction and a light irradiation pattern of the emitted light. The lighting controller is configured to control the light irradiation of the vehicle spot lamp such that the vehicle spot lamp emits the light toward the object while changing the light irradiation pattern of the emitted light.

According to the present invention, the lighting controller is configured to control the light irradiation of the vehicle spot lamp such that the vehicle spot lamp emits the light toward the object while changing the width of the light irradiation pattern.

According to the present invention, the lighting controller is configured to control the light irradiation of the vehicle spot lamp such that the vehicle spot lamp emits the light toward the object while repeatedly increasing and decreasing the width of the light irradiation pattern.

According to one or more aspects of the present invention, the lighting controller is configured to control the light irradiation of the vehicle spot lamp such that the vehicle spot lamp emits the light toward the object while changing the irradiation length of the light irradiation pattern in a direction from the vehicle to the object.

According to one or more aspects of the present invention, the lighting controller is configured to control the light irradiation of the vehicle spot lamp such that the light irradiation pattern is changed based on the position of the object.

According to one or more aspects of the present invention, the device further includes: a vehicle speed acquisition section configured to acquire the speed of the vehicle; and a collision risk determining section configured to determine the degree of risk for collision between the vehicle and the object, based on the position of the object and the speed of the vehicle. The lighting controller is configured to control the light irradiation of the vehicle spot lamp such that the light irradiation pattern is changed based on the degree of risk.

According to one or more aspects of the present invention, the object is a pedestrian existing in front of the vehicle.

According to one or more aspects of the present invention, if the collision risk determining section determines that the degree of risk for collision is high, the lighting controller controls the light irradiation of the vehicle spot lamp such that the vehicle spot lamp emits the light toward the object while changing the light irradiation pattern of the emitted light.

According to one or more aspects of the present invention, the vehicle spot lamp comprises a plurality of light emitting elements, and the lighting controller is configured to control lighting of the respective light emitting elements so as to change the light irradiation pattern of the emitted light.

According to one or more aspects of the present invention according to claim 1, there is provided a vehicle spot lamp system. The system comprises: a vehicle spot lamp configured to be mounted in a vehicle and configured to emit light toward a front area of the vehicle and to change a light irradiation direction and a light irradiation pattern of the emitted light; an object position detector configured to detect a position of an object existing in front of the vehicle; a vehicle speed sensor configured to detect the speed of the vehicle; and a vehicle spot lamp control device. The control device comprises: an object position acquisition section configured to acquire the position of the object; and a lighting controller configured to control a light irradiation of the vehicle spot lamp. The lighting controller is configured to control the light irradiation of the vehicle spot lamp such that the vehicle spot lamp emits the light toward the object while changing the light irradiation pattern of the emitted light.

According to said one or more aspects, it is possible to further call a driver's attention by changing a light irradiation pattern compared to a case where light is emitted to the position of an object without the change of a light irradiation pattern. For this reason, it is possible to make a driver more appropriately recognize the presence of an object.

### BRIEF DESCRIPTION OF THE DRAWINGS

Fig. 1 is a vertical cross-sectional view of a vehicle spot lamp according to a first embodiment;
Fig. 2 is a view showing a light-emitting element unit when seen from a viewpoint P of Fig. 1;
Fig. 3 is a view showing a projection image that is projected on the road surface by the vehicle spot lamp;
Fig. 4 is a functional block diagram schematically showing the configuration of a vehicle spot lamp system;
Fig. 5 is a flowchart illustrating the execution procedure of irradiation control in a pedestrian spotlight mode;
Fig. 6 is a view showing an example of the light irradiation of the vehicle spot lamp when the presence of a pedestrian is detected but it is determined that the collision risk is low;
Figs. 7A to 7C are views showing examples of the light irradiation of the vehicle spot lamp according to the first embodiment when the presence of a pedestrian is detected and it is determined that the collision risk is high;
Figs. 8A and 8B are views showing examples of the light irradiation of a vehicle spot lamp according to a second embodiment when the presence of a pedestrian is detected;
Figs. 9A to 9C are views showing examples of the light irradiation of a vehicle spot lamp according to a third embodiment when the presence of a pedestrian is detected; and
Figs. 10A to 10C are views showing examples of the light irradiation of a vehicle spot lamp according to a fourth embodiment when the presence of a pedestrian is detected.

### DETAILED DESCRIPTION OF THE EMBODIMENTS

Embodiments of the invention (hereinafter, referred to as "embodiments") will be described in detail below with reference to the drawings.

### (First embodiment)

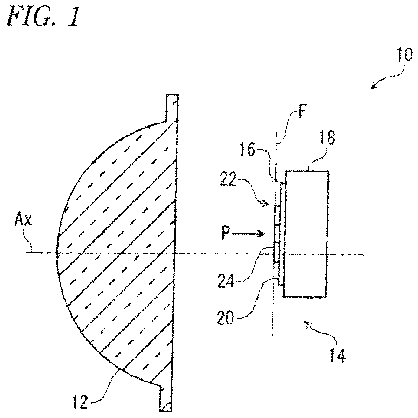

Fig. 1 is a vertical cross-sectional view of a vehicle spot lamp 10 according to a first embodiment. The vehicle spot lamp 10 is provided at each of the left front portion and the right front portion of a vehicle. The vehicle spot lamp 10 is provided separately from a light source for a low beam and a light source for a high beam that form a vehicle headlight.

The vehicle spot lamp 10 includes a projection lens 12 and a light irradiation device 14. The projection lens 12 is disposed on an optical axis Ax that extends in the longitudinal direction of the vehicle. The projection lens 12 is formed of a plano-convex aspheric lens of which the front surface is a convex surface and the rear surface is a flat surface. The projection lens 12 projects a light source image, which is formed on a rear focal plane F, onto a virtual vertical screen ahead of the vehicle spot lamp 10 as an inverted image. Accordingly, the projection lens 12 functions as an optical member that focuses the light emitted from the light irradiation device 14.

The light irradiation device 14 includes a light-emitting element substrate 16 and a heat sink 18. The light-emitting element substrate 16 includes a substrate 20 and a light-emitting element unit 22. The light-emitting element unit 22 includes a plurality of light-emitting elements 24. The light-emitting element 24 is formed of a LED that is a semiconductor light-emitting element. Meanwhile, the light-emitting element 24 may be formed of a semiconductor light-emitting element other than a LED. The light irradiation device 14 is disposed so that the light-emitting surface of each of the plurality of light-emitting elements 24 is positioned on the rear focal plane F of the projection lens 12.

The substrate 20 is a printed circuit board, and electric power is supplied to the light-emitting elements 24 through conductive members formed on the surface or the like of the substrate 20. The heat sink 18 is made of a heat dissipation material having a high heat dissipation property, such as aluminium. The heat sink 18 is directly mounted on the light-emitting element substrate 16, and dissipates heat, which is generated by the light-emitting element unit 22 and the substrate 20, to the outside.

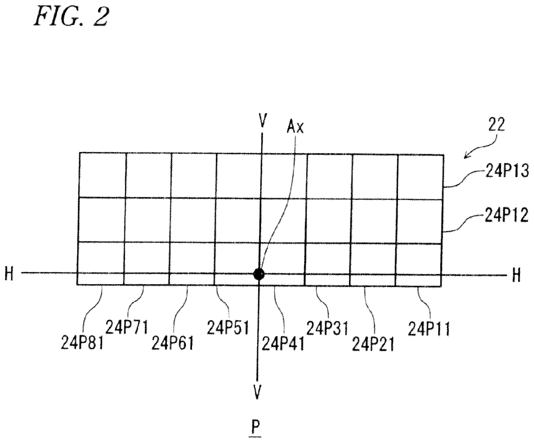

Fig. 2 is a view showing the light-emitting element unit 22 when seen from a viewpoint P of Fig. 1. As shown in Fig. 2, each of the plurality of light-emitting elements 24 of the light-emitting element unit 22 includes a substantially square light-emitting surface. Meanwhile, each of the light-emitting elements 24 may include, for example, a rectangular light-emitting surface other than a square light-emitting surface. In the first embodiment, twenty four light-emitting elements 24 are provided and arranged without intervals in three lines in the vertical direction and in eight rows in the horizontal direction.

In Fig. 2, a line H-H is an imaginary line projected as a horizontal line and a line V-V is an imaginary line projected as a vertical line that passes through a middle region in front of a vehicle. In the first embodiment, four rows of the twenty four light-emitting elements 24 are disposed on the left side of the line V-V and the other four rows thereof are disposed on the right side of the line V-V. Further, the twenty four light-emitting elements 24 are disposed so that the line H-H passes through the light-emitting elements 24 arranged on the lowest line. Accordingly, when the light-emitting elements 24 arranged on the lowest line are turned on, light is emitted above the horizontal line. Therefore, when there is a pedestrian whose face is positioned above the horizontal line, the face of the pedestrian may be irradiated with light and the pedestrian can perceive the presence of the vehicle. Meanwhile, it goes without saying that the number and disposition of the light-emitting elements 24 are not limited to this. For example, all of the plurality of light-emitting elements 24 may be disposed above the line H-H.

Hereinafter, as shown in Fig. 2, each of the light-emitting elements 24 is denoted by "light-emitting element 24Pxy" for the identification of each of the twenty four light-emitting elements 24. x means the row number from the right and y means the line number from the bottom.

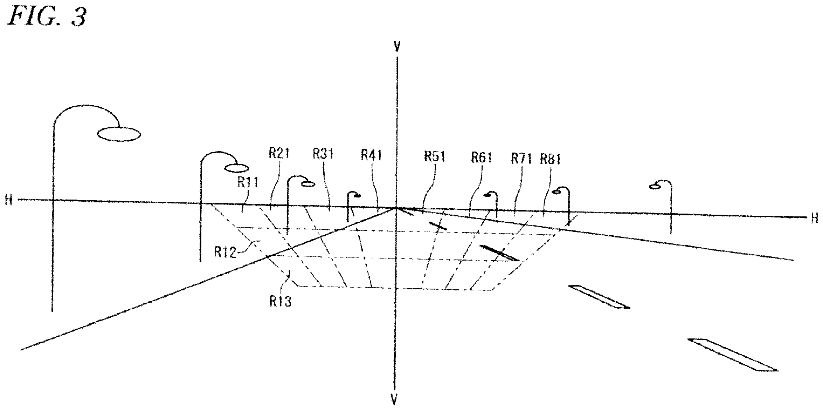

Fig. 3 is a view showing a projection image that is projected on the road surface by the vehicle spot lamp 10. "Regions Rxy" shown in the respective regions of the projection image mean light distribution patterns that are formed by the light-emitting elements 24Pxy. Accordingly, for example, "region R11" means a light distribution pattern that is formed when the light-emitting element 24P11 is turned on. Since the road surface is generally horizontal, the light distribution pattern projected on the road surface is formed so as to radiate from the vehicle as the center.

In the first embodiment, the vehicle spot lamp 10 forms a light distribution pattern, which extends toward a pedestrian, by irradiating a region where the pedestrian is present and a region that is closer to the vehicle than this region with light, and informs a driver that the pedestrian is present in the extending direction of light. For example, when the position of the pedestrian is detected in a region R31, the vehicle spot lamp 10 forms not only a light distribution pattern of the region R31 by turning on the light-emitting element 24P31 and forms but also light distribution patterns of regions R32 and R33, which are closer to the vehicle than the region R31, by turning on the light-emitting elements 24P32 and 24P33. Accordingly, a light distribution pattern that linearly extends along the regions R33, R32, and R31, is formed, so that it is possible to appropriately inform a driver of a direction where the pedestrian is present.

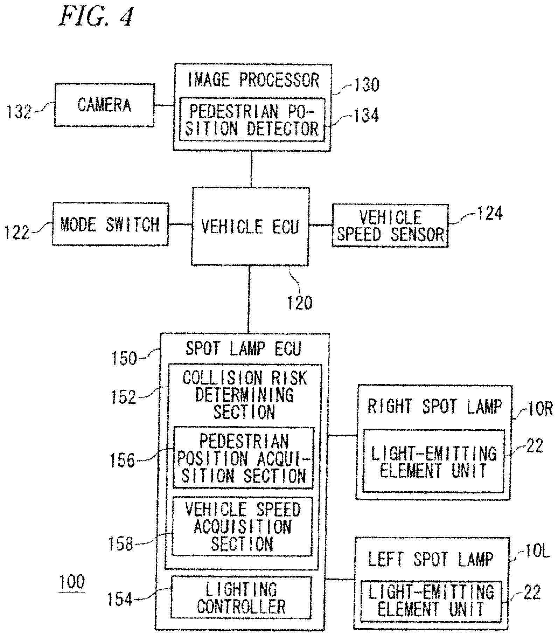

Fig. 4 is a functional block diagram schematically showing the configuration of a vehicle spot lamp system 100. Fig. 4 shows functional blocks that are realized by the cooperation of software and hardware, such as a CPU, a ROM, and a RAM. Accordingly, these functional blocks can be realized in various ways by the combination of hardware and software. The vehicle spot lamp system 100 includes a vehicle electronic control unit (hereinafter, referred to as a "vehicle ECU (Electronic Control Unit)") 120, a mode switch 122, vehicle speed sensors 124, an image processor 130, a camera 132, a spot lamp electronic control unit (hereinafter, referred to as a "spot lamp ECU") 150, a left spot lamp 10L that is provided at the left front portion of the vehicle, and a right spot lamp 10R provided at the right front portion of the vehicle.

The mode switch 122 is provided near the driver's seat of the vehicle. A driver can instruct a pedestrian spotlight mode to be started and ended by operating the mode switch 122.

The camera 132, which is an imaging device, includes a CCD (Charge Coupled Device) image sensor or a CMOS (Complementary Metal Oxide Semiconductor) image sensor, and outputs taken images as image data. The camera 132 is installed in the cabin of the vehicle, such as inside a windshield, so as to be capable of taking an image of a region in front of the vehicle. A stereo camera is employed as the camera 132. Meanwhile, other cameras may be employed as the camera 132. The camera 132 takes an image of a region in front of the vehicle, creates image data of a still image or a moving image, and outputs the image data to the image processor 130.

The image processor 130 includes a CPU that performs various kinds of arithmetic processing, a ROM that stores various control programs, and a RAM that is used as a work area in which data are stored or programs are executed. The image processor 130 acquires the data of the image that is taken by the camera 132, and performs image processing. The image processor 130 functions as an image data acquisition section that acquires image data created by the camera 132.

The image processor 130 includes a pedestrian position detector 134. The pedestrian position detector 134 specifies the image of the pedestrian by performing image processing on the image data obtained from the camera 132 that takes an image of a region in front of the vehicle, and detects the position of the pedestrian by using the image of the pedestrian. Accordingly, the camera 132 and the image processor 130 function as a position detector that detects the position of the pedestrian. Since a technique for specifying the image of the pedestrian and a technique for detecting the position of the pedestrian are well known, the description thereof will be omitted. The detected position of the pedestrian is sent to the vehicle ECU 120.

In the first embodiment, the position of a pedestrian is detected as the position of an object of which the collision with a vehicle should be avoided. However, it goes without saying that an object of which the position is to be detected by the camera 132 and the image processor 130 is not limited to a pedestrian. For example, an object position detector, which detects the positions of other objects, such as animals or obstructions on the road surface, of which the collision with a vehicle should be avoided, may be provided instead of the pedestrian position detector 134. The object position detector may specify the image of an object by performing image processing on the image data obtained from the camera 132, and may detect the position of the object by using the image of the object.

Meanwhile, the camera 132 may be connected to the vehicle ECU 120. The vehicle ECU 120 may specify the image of the pedestrian by using the image data obtained from the camera 132, and may detect the position of the pedestrian by using the image of the pedestrian. Further, the camera 132 may be connected to the spot lamp ECU 150. The spot lamp ECU 150 may specify the image of the pedestrian by using the image data obtained from the camera 132, and may detect the position of the pedestrian by using the image of the pedestrian.

The vehicle ECU 120 also includes a CPU, a ROM, and a RAM. The vehicle ECU 120 acquires a request for the start of a spot lamp mode or a request for the end of a spot lamp mode in response to the operation of the mode switch 122.

Vehicle speed sensors 124, which detect the speed of the vehicle by detecting the rotational speeds of the corresponding wheels, are provided near the wheels of the vehicle on which the vehicle spot lamp 10, the vehicle ECU 120, and the spot lamp ECU 150 are mounted. The vehicle ECU 120 acquires the detection results of the vehicle speed sensors 124.

The spot lamp ECU 150 is disposed outside a lamp chamber, and controls the lighting of the light-emitting elements 24 of each of the left and right spot lamps 10L and 10R. Accordingly, the spot lamp ECU 150 functions as a controller or a control device that controls the light irradiation of the vehicle spot lamp 10.

The spot lamp ECU 150 includes a collision risk determining section 152 and a lighting controller 154. The collision risk determining section 152 includes a pedestrian position acquisition section 156 and a vehicle speed acquisition section 158. The vehicle ECU 120 sends the position of the pedestrian, which is received from the image processor 130, to the spot lamp ECU 150. The pedestrian position acquisition section 156 acquires the position of the pedestrian that is received from the vehicle ECU 120. Meanwhile, an object position acquisition section, which acquires the position, which is detected by the above-mentioned object position detector, of an object, of which the collision with a vehicle should be avoided, may be provided instead of the pedestrian position acquisition section 156.

The vehicle ECU 120 calculates the speed of the vehicle using the detection results of the vehicle speed sensors 124, and sends the data of the calculation result to the spot lamp ECU 150. The vehicle speed acquisition section 158 acquires the detected speed of the vehicle. Meanwhile, the vehicle speed sensors 124 may be connected to the spot lamp ECU 150, and the spot lamp ECU 150 may directly receive the detection results from the vehicle speed sensors 124.

The collision risk determining section 152 determines collision risk on the basis of the acquired position of the pedestrian and the acquired speed of the vehicle. Specifically, the collision risk determining section 152 calculates a distance between the vehicle and the pedestrian using the position of the pedestrian. Next, the collision risk determining section 152 calculates the time, which is taken for the vehicle to collide with the pedestrian, by dividing the calculated distance by the speed of the vehicle. The collision risk determining section 152 determines that collision risk is high when the time is equal to or shorter than a predetermined value.

Meanwhile, it goes without saying that means for determining collision risk is not limited to this. For example, the collision risk determining section 152 may have a collision risk determination map that corresponds to a distance between a vehicle and a pedestrian, the speed of a vehicle, and collision risk. A method of calculating a distance between a pedestrian and a vehicle is the same as described above. The collision risk determining section 152 may determine that the collision risk is high when a distance between a pedestrian and a vehicle and the speed of a vehicle correspond to high collision risk in the collision risk determination map.

Further, the collision risk determining section 152 may determine that the collision risk is high when a distance between a pedestrian and a vehicle is equal to or shorter than a predetermined value, regardless of the speed of a vehicle. Furthermore, the collision risk determining section 152 may determine that the collision risk is high when the presence of a pedestrian is detected and the speed of a vehicle is equal to or higher than a predetermined value, regardless of the position of a pedestrian.

The lighting controller 154 controls the lighting of each of the plurality of light-emitting elements 24 of the left and right spot lamps 10L and 10R by outputting an on/off signal to the light-emitting element substrate 16 of each of the left and right spot lamps 10L and 10R.

For example, there is a case where it is necessary to make a driver strongly recognize the presence of an object to quickly avoid a collision, such as a case where a distance between a pedestrian and a vehicle is relatively short. Accordingly, there is a demand for the development of a technique that not only can irradiate the position of a pedestrian with light but also can make a driver more appropriately recognize the presence of an object of which the collision with a vehicle should be avoided. For this reason, in the first embodiment, the lighting controller 154 controls the light irradiation of the vehicle spot lamp 10 so that light is emitted to the position of a pedestrian while a light irradiation pattern is changed. This control procedure will be described in detail below with reference to a flowchart.

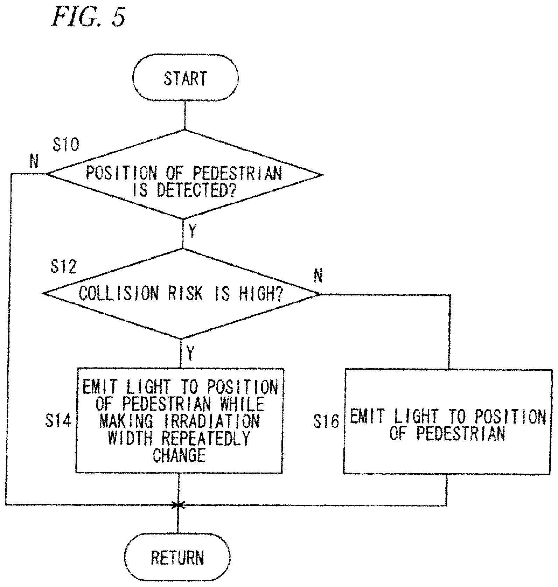

Fig. 5 is a flowchart illustrating the execution procedure of irradiation control in a pedestrian spotlight mode. When the mode switch 122 is operated and a request for the start of a pedestrian spotlight mode is acquired, the processing of this flowchart is started. Until the mode switch 122 is operated and a request for the end of a pedestrian spotlight mode is acquired, the started processing is repeatedly performed at an interval of a predetermined time.

The collision risk determining section 152 determines whether the position of a pedestrian is detected (S10). If the position of a pedestrian is not detected (N in S10), the processing of the flowchart is temporarily ended. If the position of a pedestrian is detected (Y in S10), the collision risk determining section 152 determines whether the collision risk between a vehicle and the pedestrian is high using the position of the pedestrian and the speed of the vehicle. If the collision risk is low (N in S12), the lighting controller 154 makes the position of the pedestrian be irradiated with light (S16).

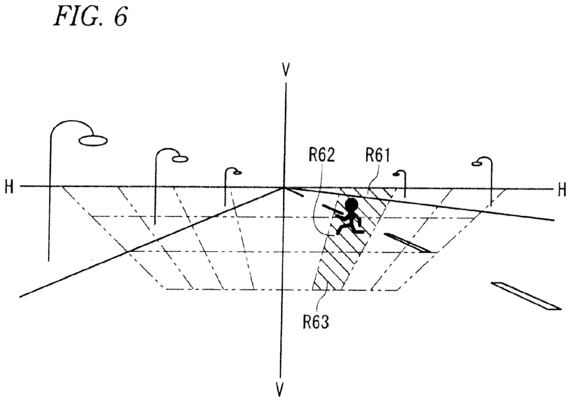

Fig. 6 is a view showing an example of the light irradiation of the vehicle spot lamp 10 when the presence of a pedestrian is detected but it is determined that the collision risk is low. In this example, a pedestrian is positioned over regions R61 and R62. For this reason, the pedestrian position detector 134 detects the regions R61 and R62 as the position of the pedestrian. The detected position of the pedestrian is sent to the spot lamp ECU 150 through the vehicle ECU 120, and the pedestrian position acquisition section 156 acquires the regions R61 and R62 as the position of the pedestrian. The lighting controller 154 turns on the light-emitting elements 24 for irradiating these regions with light so that the regions corresponding to the position of the pedestrian and a region close to the vehicle from the position of the pedestrian are irradiated with light. Hereinafter, a region, which is formed of the regions corresponding to the position of the pedestrian and the region close to the vehicle from the position of the pedestrian, is referred to as a "reference region".

Since the position of the pedestrian corresponds to the regions R61 and R62 in the example shown in Fig. 6, the region close to the vehicle from the position of the pedestrian becomes a region R63. For this reason, the lighting controller 154 turns on the light-emitting elements 24P61, 24P62, and 24P63 so that the reference region formed of the regions R61, R62, and R63 is irradiated with light. Accordingly, a light distribution pattern, which linearly extends toward the pedestrian as shown in Fig. 6, is formed. Therefore, it is possible to call a driver's attention to the position of the pedestrian.

Returning to Fig. 5, if the collision risk is high (Y in S12), the lighting controller 154 controls the lighting of the plurality of light-emitting elements 24 so that light is emitted to the position of the pedestrian while an irradiation width repeatedly changes through the repetition of the increase and reduction of an irradiation width (S14). Specifically, the lighting controller 154 turns on the light-emitting elements 24 for irradiating the reference region, which includes the region corresponding to the position of the pedestrian, with light. Further, the lighting controller 154 synchronously and repeatedly turns on and off the light-emitting elements 24 at a constant interval so that the regions adjacent to the reference region in a lateral direction at a constant interval are synchronously and repeatedly irradiated or not irradiated with light. Accordingly, the lighting controller 154 makes the position of the pedestrian be irradiated with light while making an irradiation width repeatedly change through the repetition of the increase and reduction of an irradiation width.

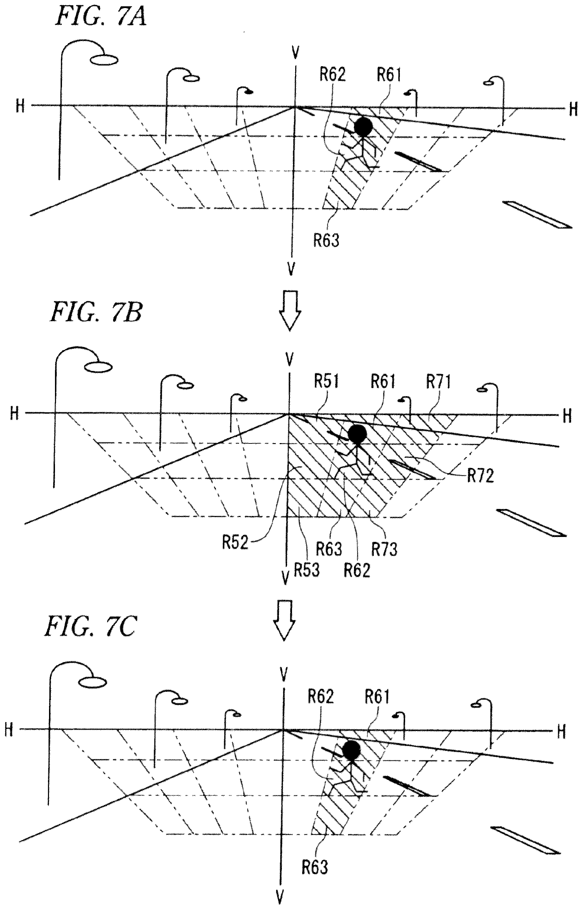

Figs. 7A to 7C are views showing examples of the light irradiation of the vehicle spot lamp 10 according to the first embodiment when the presence of a pedestrian is detected and it is determined that the collision risk is high. In this example, a pedestrian is positioned over the regions R61 and R62. For this reason, the pedestrian position detector 134 detects the regions R61 and R62 as the position of the pedestrian. The detected position of the pedestrian is sent to the spot lamp ECU 150 through the vehicle ECU 120, and the pedestrian position acquisition section 156 acquires the regions R61 and R62 as the position of the pedestrian. The lighting controller 154 turns on the light-emitting elements 24 for irradiating these regions with light so that the reference region including the regions corresponding to the position of the pedestrian is irradiated with light.

Since the position of the pedestrian corresponds to the regions R61 and R62 in the example shown in Fig. 7A, the region close to the vehicle from the position of the pedestrian becomes a region R63. For this reason, the lighting controller 154 turns on the light-emitting elements 24P61, 24P62, and 24P63 so that the reference region formed of the regions R61, R62, and R63 is irradiated with light. In this case, an irradiation width becomes the width of one row of the regions R61, R62, and R63.

Since the reference region is formed of the regions R61, R62, and R63, adjacent regions become regions R51, R52, R53, R71, R72, and R73. The lighting controller 154 synchronously and repeatedly turns on and off the light-emitting elements 24, which irradiate the adjacent regions with light, at a constant interval. Specifically, the lighting controller 154 turns on the light-emitting elements 24P51, 24P52, 24P53, 24P71, 24P72, and 24P73, which irradiate the adjacent regions with light, first. Accordingly, the regions R51, R52, R53, R71, R72, and R73 are also irradiated with light as shown in Fig. 7B, so that an irradiation width becomes the width of three rows.

Then, the lighting controller 154 turns off the light-emitting elements 24P51, 24P52, 24P53, 24P71, 24P72, and 24P73 that irradiate the adjacent regions with light. For this reason, an irradiation width becomes the width of one row of the regions R61, R62, and R63 again as shown in Fig. 7C. In this way, the lighting controller 154 makes the position of the pedestrian be irradiated with light while making an irradiation width repeatedly change through the repetition of the increase and reduction of an irradiation width by repeating operations for turning on the light-emitting elements 24 shown in Figs. 7B and 7C.

Meanwhile, when the position of a pedestrian is detected, regardless of collision risk, the lighting controller 154 may make the position of the pedestrian be irradiated with light while making an irradiation width repeatedly change through the repetition of the increase and reduction of an irradiation width. Accordingly, it is possible to make a driver appropriately recognize the presence of a pedestrian regardless of the position of the pedestrian.

As described above, in the first embodiment, the vehicle spot lamp 10 is adapted to be capable of changing a light irradiation direction and a light irradiation pattern by controlling the lighting of each of the plurality of light-emitting elements 24. Meanwhile, the vehicle spot lamp 10 may not include the plurality of light-emitting elements 24, and may be adapted to be capable of, for example, changing a light irradiation direction by moving a light source such as a light-emitting element 24 with an actuator such as a motor. Further, the vehicle spot lamp 10 may be adapted to be capable of changing a light irradiation pattern by changing a light blocking area of a light source such as a light-emitting element 24 through the drive of a shade using an actuator such as a motor.

### (Second embodiment)

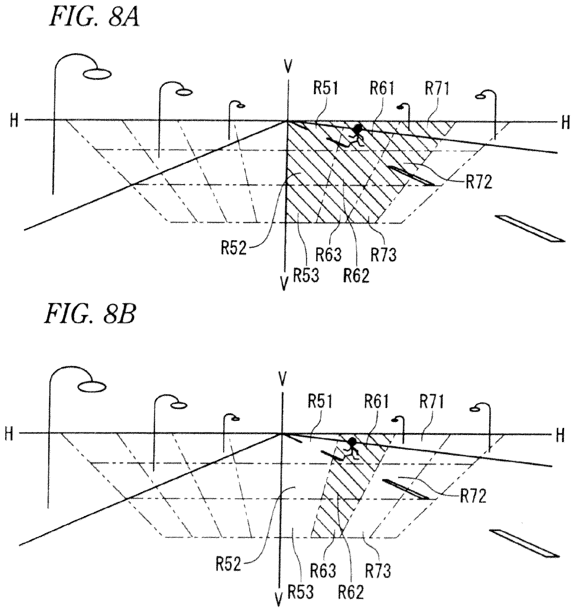

Figs. 8A and 8B are views showing examples of the light irradiation of a vehicle spot lamp 10 according to a second embodiment when the presence of a pedestrian is detected. Hereinafter, as long as it is not particularly mentioned, the configuration of the vehicle spot lamp 10 according to the second embodiment is the same as that of the vehicle spot lamp 10 according to the first embodiment. Further, the same portions as those of the first embodiment are denoted by the same reference numerals, and the description thereof will be omitted.

In the second embodiment, when the position of a pedestrian is detected, regardless of the position of a pedestrian and the speed of a vehicle, that is, regardless of the collision risk between the vehicle and the pedestrian, the lighting controller 154 controls the light irradiation of the vehicle spot lamp 10 so that light is emitted to the position of the pedestrian while an irradiation width is reduced. Specifically, when the position of a pedestrian is detected, first, the lighting controller 154 turns on the light-emitting elements 24 corresponding to a reference region that includes a region including the position of the pedestrian and a region closer to a vehicle than the region and regions that are adjacent to the reference region in a lateral direction so that these regions are irradiated with light. Then, the lighting controller 154 turns off the light-emitting elements 24, which correspond to the adjacent regions, to stop the light irradiation in the adjacent regions of the regions that are irradiated with light.

In the example shown in Fig. 8A, a pedestrian is positioned in a region R61. Accordingly, a reference region is formed of the region R61 and regions R62 and R63 that are closer to the vehicle than the region R61. Further, adjacent regions are formed of regions R51, R52, R53, R71, R72, and R73 that are adjacent to the reference region in a lateral direction. The lighting controller 154 turns on the light-emitting elements 24P51 to 24P53, 24P61 to 24P63, and 24P71 to 24P73 for irradiating these regions with light so that the reference region and the adjacent regions are irradiated with light. Accordingly, an irradiation width becomes the width of three rows.

Then, the lighting controller 154 turns off the light-emitting elements 24P51 to 24P53 and 24P71 to 24P73, which irradiate the adjacent regions with light, to stop the light irradiation in the adjacent regions when a predetermined time has passed after the reference region and the adjacent regions start to be irradiated with light. Accordingly, the light irradiation in the adjacent regions is stopped as shown in Fig. 8B, so that an irradiation width is reduced to the width of one row from the width of three rows. The lighting controller 154 avoids turning off additional light-emitting elements 24 in order to maintain the light irradiation at the position of the pedestrian, and maintains the light irradiation in the reference region. It is possible to make a driver appropriately know the position of a pedestrian even by reducing an irradiation width as described above. Meanwhile, the lighting controller 154 may control the lighting of the plurality of light-emitting element 24 so that an irradiation width when the collision risk is high is smaller than an irradiation width when the collision risk is low as in the first embodiment.

### (Third embodiment)

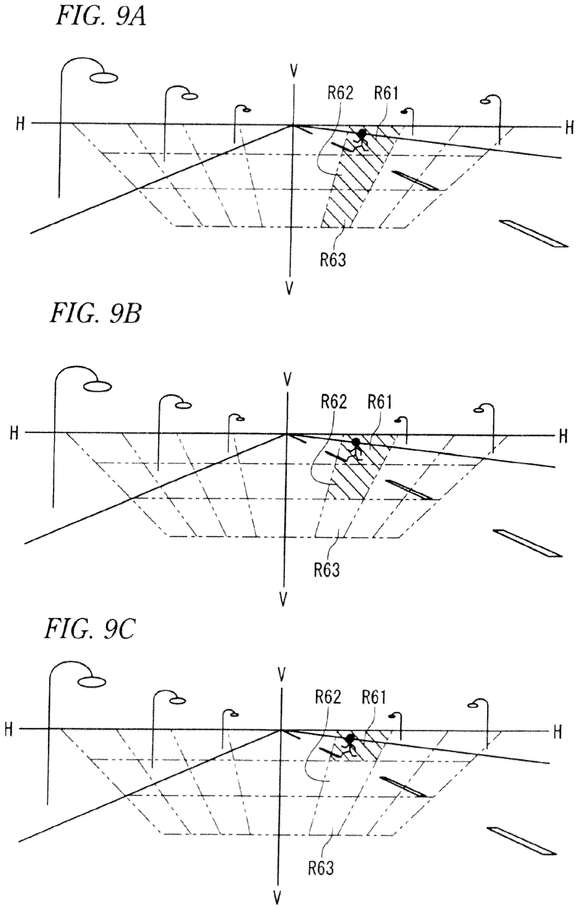

Figs. 9A to 9C are views showing examples of the light irradiation of a vehicle spot lamp 10 according to a third embodiment when the presence of a pedestrian is detected. Hereinafter, as long as it is not particularly mentioned, the configuration of the vehicle spot lamp 10 according to the third embodiment is the same as that of the vehicle spot lamp 10 according to the first embodiment. Further, the same portions as those of the above-mentioned embodiments are denoted by the same reference numerals, and the description thereof will be omitted.

In the third embodiment, when the position of a pedestrian is detected, regardless of the position of a pedestrian and the speed of a vehicle, the lighting controller 154 controls the light irradiation of the vehicle spot lamp 10 so that light is emitted to the position of the pedestrian while an irradiation width is reduced in a direction toward the position of the pedestrian from the vehicle. Specifically, when the position of a pedestrian is detected, first, the lighting controller 154 turns on the light-emitting elements 24 corresponding to a region that includes the position of the pedestrian and a region that is closer to the vehicle than the region so that these regions are irradiated with light. Then, the lighting controller 154 turns off the light-emitting elements 24, which correspond to the regions, to stop the light irradiation in the region, which is closest to the vehicle, of the regions that are irradiated with light. The lighting controller 154 repeats an operation for stopping the light irradiation in the region, which is closest to the vehicle, of the regions, which are irradiated with light, at an interval of a predetermined time so that only a region including the pedestrian is finally irradiated with light.

In the example shown in Fig. 9A, a pedestrian is positioned in a region R61. Accordingly, the lighting controller 154 turns on the light-emitting elements 24P61, 24P62, and 24P63 corresponding to a region R61 and regions R62 and R63 closer to the vehicle than the region R61 so that these regions are irradiated with light. Then, the lighting controller 154 turns off the light-emitting element 24P63, which irradiates the region R63 with light, to stop the light irradiation in the region R63, which is closest to the vehicle, of the regions R61, R62, and R63 that are irradiated with light. Accordingly, the light irradiation in the region R63 is stopped as shown in Fig. 9B, so that an irradiation length to the position of the pedestrian from the vehicle is reduced.

In addition, the lighting controller 154 turns off the light-emitting element 24P62, which irradiates the region R62 with light, to stop the light irradiation in the region R62, which is closest to the vehicle, of the regions R61 and R62 that are irradiated with light. Accordingly, the light irradiation in the region R62 is stopped as shown in Fig. 9C, so that an irradiation length to the position of the pedestrian from the vehicle is further reduced. In this case, a region irradiated with light is only the region R61 in which the pedestrian is positioned. Accordingly, the lighting controller 154 avoids turning off additional light-emitting elements 24, and maintains the light irradiation in the region R61. It is possible to make a driver appropriately know the position of a pedestrian even by reducing an irradiation length to the position of the pedestrian from the vehicle as described above.

Meanwhile, when the collision risk is low, the lighting controller 154 may control the lighting of the plurality of light-emitting element 24 so that a region including the position of the pedestrian and regions closer to the vehicle than the region are irradiated with light as in the first embodiment. When collision risk is high, the lighting controller 154 may control the lighting of the plurality of light-emitting elements 24 so that an irradiation length to the position of the pedestrian from the vehicle is shorter than an irradiation length when the collision risk is low, by the sequential stop of the light irradiation in a region that is closest to the vehicle.

Moreover, when the position of a pedestrian is detected, the lighting controller 154 may control the lighting of the plurality of light-emitting elements 24 so that the reduction and lengthening of an irradiation length to the position of the pedestrian from the vehicle are repeated by the repetition of the operations of Figs. 9A to 9C. Accordingly, it is possible to make a driver more appropriately know the position of a pedestrian.

### (Fourth embodiment)

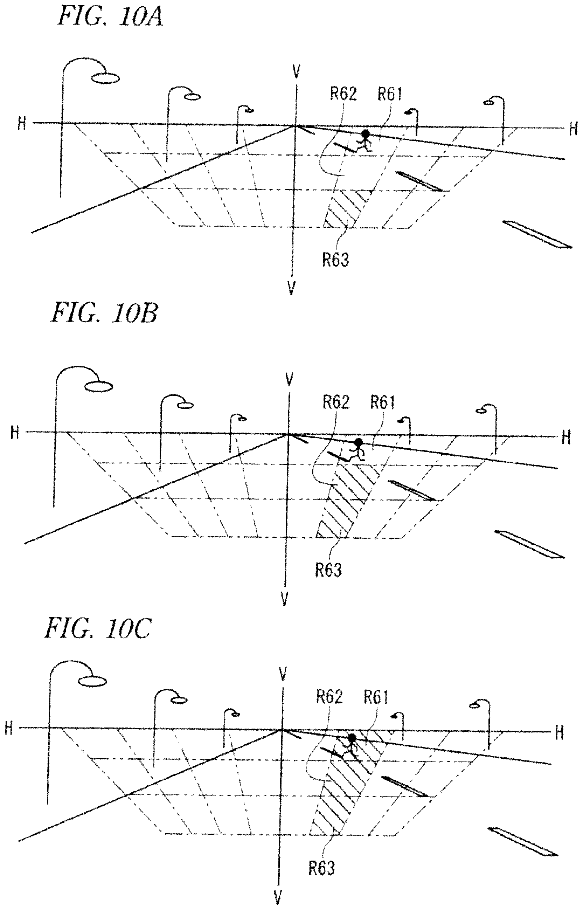

Figs. 10A to 10C are views showing examples of the light irradiation of a vehicle spot lamp 10 according to a fourth embodiment when the presence of a pedestrian is detected. Hereinafter, as long as it is not particularly mentioned, the configuration of the vehicle spot lamp according to the fourth embodiment is the same as that of the vehicle spot lamp 10 according to the first embodiment. Further, the same portions as those of the above-mentioned embodiments are denoted by the same reference numerals, and the description thereof will be omitted.

In the fourth embodiment, when the position of a pedestrian is detected, regardless of the position of a pedestrian and the speed of a vehicle, the lighting controller 154 controls the light irradiation of the vehicle spot lamp 10 so that light is emitted to the position of the pedestrian while an irradiation length in a direction toward the position of the pedestrian from the vehicle is lengthened. Specifically, when the position of a pedestrian is detected, first, the lighting controller 154 turns on the light-emitting element 24 corresponding to a first region that is closer to the vehicle than a subject region including the position of the pedestrian so that the first region is irradiated with light. Then, the lighting controller 154 turns on the light-emitting element 24, which corresponds to a second region closer to the position of the pedestrian than the first region, so that the second region is irradiated with light. The lighting controller 154 repeats this operation at an interval of a predetermined time until the subject region is irradiated with light.

In the example shown in Fig. 10A, a pedestrian is positioned in a region R61. Accordingly, the lighting controller 154 turns on the light-emitting element 24P63 so that a region R63 closest to the vehicle as compared to the region R61, which is a subject region, is irradiated with light as shown in Fig. 10A. Then, the lighting controller 154 also turns on the light-emitting element 24P62 so that a region R62 closer to the region R61 than the region R63 is also irradiated with light as shown in Fig. 10B. After that, the lighting controller 154 also turns on the light-emitting element 24P61 so that the region R61, which is a subject region, is also irradiated with light as shown in Fig. 10C. Accordingly, an irradiation length to the position of the pedestrian from the vehicle is lengthened.

When the subject region including the pedestrian is irradiated with light, the lighting controller 154 avoids turning on additional light-emitting elements 24 and maintains the light irradiation in the regions R61, R62, and R63. It is possible to make a driver appropriately know the position of a pedestrian even by lengthening an irradiation length to the position of the pedestrian from the vehicle as described above.

Meanwhile, when the collision risk is low, the lighting controller 154 may control the lighting of the plurality of light-emitting element 24 so that a region including the position of the pedestrian and regions closer to the vehicle than the region are irradiated with light as in the first embodiment. When the collision risk is high, the lighting controller 154 may control the lighting of the plurality of light-emitting element 24 so that light irradiation is sequentially performed from a region closest to the vehicle to a region including the position of the pedestrian.

Moreover, when the position of a pedestrian is detected, the lighting controller 154 may control the lighting of the plurality of light-emitting elements 24 so that the reduction and lengthening of an irradiation length to the position of the pedestrian from the vehicle are repeated by the repetition of the operations of Figs. 10A to 10C. Accordingly, it is possible to make a driver more appropriately know the position of a pedestrian.

The invention is not limited to each of the above-mentioned embodiments, and the appropriate combinations of the respective components of the respective embodiments are effective as an embodiment of the invention. Further, modifications such as various changes in design may be added to each of the embodiments on the basis of the knowledge of those skilled in the art, and embodiments to which the above-mentioned modifications have been added can be also included in the scope of the invention. Such examples will be provided below.

In a certain modification, for example, the lighting controller 154 determines collision risk using the position of a pedestrian and controls the light irradiation of the vehicle spot lamp 10 so that an irradiation width is increased as the collision risk becomes high. A method of determining collision risk using the position of a pedestrian is the same as described above. It is possible to call to a driver's attention even by changing a light irradiation pattern in this way.

In another certain modification, when the collision risk does not satisfy a predetermined condition and is low, the lighting controller 154 avoids emitting light to the position of a pedestrian by irradiating only the road surface with light toward the position of the pedestrian. When the collision risk satisfies a predetermined condition and becomes high, the lighting controller 154 controls the light irradiation of the vehicle spot lamp 10 so that light is also emitted to the position of the pedestrian.

For example, the lighting controller 154 determines that the collision risk is low when the estimated time until the collision between a pedestrian and a vehicle, which is calculated using the position of the pedestrian and the speed of the vehicle, is 3.5 seconds or more; and controls the light irradiation of the vehicle spot lamp 10 as to avoid emitting light to the position of a pedestrian by irradiating only the road surface with light toward the position of the pedestrian. The lighting controller 154 determines that the collision risk is high when the estimated time until the collision between a pedestrian and a vehicle is shorter than 3.5 seconds; and controls the light irradiation of the vehicle spot lamp 10 so as to emit light to even the position of a pedestrian. In this case, when the estimated time until the collision becomes shorter than 2.5 seconds and the collision risk becomes higher, the lighting controller 154 may control the light irradiation of the vehicle spot lamp so that the area of the region of light irradiating the pedestrian or the road surface is reduced. Even in this aspect, it is possible to make a driver appropriately know the position of a pedestrian and the collision risk of the collision between the pedestrian and a vehicle.

## Claims

1. A vehicle spot lamp system (100) comprising:
a vehicle spot lamp (10) being configured to be mounted in a vehicle and configured to emit light toward a front area of the vehicle and to change a light irradiation direction and a light irradiation pattern of the emitted light;
an object position detector (134) configured to detect a position of an object existing in front of the vehicle;
a vehicle speed sensor (124) configured to detect the speed of the vehicle; and
a vehicle spot lamp control device (150) comprising:
an object position acquisition section (156) configured to acquire a position of an object existing in front of a vehicle; and
a lighting controller (154) configured to control a light irradiation of the vehicle spot lamp (10),
**characterized in that** the vehicle spot lamp (10) includes a plurality of light emitting elements (24) and a projection lens (12),
the plurality of light emitting elements (24) are arranged in plural lines in a vertical direction and in plural rows in a horizontal direction,
the light-emitting surface of each of the plurality of light emitting elements (24) is positioned on a rear focal plane of the projection lens (12), and
the lighting controller (154) is configured to control the light irradiation of the vehicle spot lamp (10) by controlling lighting of the respective light emitting elements (24) so as to change the light irradiation pattern of the emitted light such that the vehicle spot lamp (10) emits the light toward the object while changing the light irradiation pattern of the emitted light, wherein the controlling lighting of the respective light emitting elements (24) comprises switching on/off the respective light emitting elements (24),
wherein the lighting controller (154) is configured to control the light irradiation of the vehicle spot lamp (10) such that the vehicle spot lamp (10) emits the light toward the object while changing the width of the light irradiation pattern, and
wherein the lighting controller (154) is configured to control the light irradiation of the vehicle spot lamp (10) such that the vehicle spot lamp (10) emits the light toward the object while repeatedly increasing and decreasing the width of the light irradiation pattern.

2. The system according to claim **1,**
wherein the lighting controller (154) is configured to control the light irradiation of the vehicle spot lamp (10) such that the vehicle spot lamp (10) emits the light toward the object while changing the irradiation length of the light irradiation pattern in a direction from the vehicle to the object.

3. The system according to claim **1** or **2,**
wherein the lighting controller (154) is configured to control the light irradiation of the vehicle spot lamp (10) such that the light irradiation pattern is changed based on the position of the object.

4. The system according to any one of claims **1** to **3,** further comprising:
a vehicle speed acquisition section (158) configured to acquire the speed of the vehicle; and
a collision risk determining section (152) configured to determine the degree of risk for collision between the vehicle and the object, based on the position of the object and the speed of the vehicle, and
wherein the lighting controller (154) is configured to control the light irradiation of the vehicle spot lamp such that the light irradiation pattern is changed based on the degree of risk.

5. The system according to claim **4,** wherein
if the collision risk determining section (152) determines that the degree of risk for collision is high, the lighting controller controls the light irradiation of the vehicle spot lamp such that the vehicle spot lamp emits the light toward the object while changing the light irradiation pattern of the emitted light.

6. The system according to any one of claims **1** to **5,** wherein the object position detector (134) is a pedestrian position detector and the object position acquisition section (156) is a pedestrian position acquisition section.

## Patentansprüche

1. Fahrzeug-Spotlampensystem (100), umfassend:
eine Fahrzeug-Spotlampe (10), die ausgelegt ist, in einem Fahrzeug montiert zu werden, und ausgelegt ist, Licht zu einem vorderen Bereich des Fahrzeugs zu emittieren und eine Lichteinstrahlungsrichtung und ein Lichteinstrahlungsmuster des emittierten Lichts zu verändern,
einen Objektpositionsdetektor (134), der ausgelegt ist, eine Position eines Objekts zu detektieren, das vor dem Fahrzeug vorhanden ist,
einen Fahrzeug-Geschwindigkeitssensor (124), der ausgelegt ist, die Geschwindigkeit des Fahrzeugs zu detektieren, und
eine Fahrzeug-Spotlampen-Steuervorrichtung (150), umfassend:
eine Objektposition-Erfassungssektion (156), die ausgelegt ist, eine Position eines Objekts zu detektieren, das vor dem Fahrzeug vorhanden ist, und
eine Beleuchtungssteuereinheit (154), die ausgelegt ist, eine Lichteinstrahlung der Fahrzeug-Spotlampe (10) zu steuern,
**dadurch gekennzeichnet, dass** die Fahrzeug-Spotlampe (10) eine Vielzahl von lichtemittierenden Elementen (24) und eine Projektionslinse (12) aufweist,
die Vielzahl von lichtemittierenden Elementen (24) in mehreren Reihen in einer vertikalen Richtung und in mehreren Reihen in einer horizontalen Richtung angeordnet ist,
die lichtemittierende Fläche jedes von der Vielzahl von lichtemittierenden Elementen (24) auf einer hinteren fokalen Ebene der Projektionslinse (12) positioniert ist, und
die Beleuchtungssteuereinheit (154) ausgelegt ist, die Lichteinstrahlung der Fahrzeug-Spotlampe (10) durch Steuern der Beleuchtung der jeweiligen lichtemittierenden Elemente (24) zu steuern, um so das Lichteinstrahlungsmuster des emittierenden Lichts derart zu verändern, dass die Fahrzeug-Spotlampe (10) das Licht zu dem Objekt emittiert, während das Lichteinstrahlungsmuster des emittierten Lichts verändert wird, wobei das Steuern der Beleuchtung der jeweiligen lichtemittierenden Elemente (24) ein Ein/Ausschalten der jeweiligen lichtemittierenden Elemente (24) umfasst,
wobei die Beleuchtungssteuereinheit (154) ausgelegt ist, die Lichteinstrahlung der Fahrzeug-Spotlampe (10) derart zu steuern, dass die Fahrzeug-Spotlampe (10) das Licht zu dem Objekt emittiert, während die Breite des Lichteinstrahlungsmusters verändert wird, und
wobei die Beleuchtungssteuereinheit (154) ausgelegt ist, die Lichteinstrahlung der Fahrzeug-Spotlampe (10) derart zu steuern, dass die Fahrzeug-Spotlampe (10) das Licht zu dem Objekt emittiert, während die Breite des Lichteinstrahlungsmusters wiederholt erhöht und verringert wird.

2. System nach Anspruch 1,
wobei die Beleuchtungssteuereinheit (154) ausgelegt ist, die Lichteinstrahlung der Fahrzeug-Spotlampe (10) derart zu steuern, dass die Fahrzeug-Spotlampe (10) das Licht zu dem Objekt emittiert, während die Einstrahlungslänge des Lichteinstrahlungsmusters in einer Richtung von dem Fahrzeug zu dem Objekt verändert wird.

3. System nach Anspruch 1 oder 2,
wobei die Beleuchtungssteuereinheit (154) ausgelegt ist, die Lichteinstrahlung der Fahrzeug-Spotlampe (10) derart zu steuern, dass das Lichteinstrahlungsmuster auf der Basis der Position des Objekts verändert wird.

4. System nach einem der Ansprüche 1 bis 3, ferner umfassend:
eine Fahrzeug-Geschwindigkeitserfassungssektion (158), die ausgelegt ist, die Geschwindigkeit des Fahrzeugs zu erfassen, und
eine Kollisionsrisiko-Bestimmungssektion (152), die ausgelegt ist, den Grad eines Risikos für eine Kollision zwischen dem Fahrzeug und dem Objekt auf der Basis der Position des Objekts und der Geschwindigkeit des Fahrzeugs zu bestimmen, und
wobei die Beleuchtungssteuereinheit (154) ausgelegt ist, die Lichteinstrahlung der Fahrzeug-Spotlampe derart zu steuern, dass das Lichteinstrahlungsmuster auf der Basis des Risikograds verändert wird.

5. System nach Anspruch 4, wobei,
wenn die Kollisionsrisiko-Bestimmungssektion (152) bestimmt, dass der Grad eines Risikos für eine Kollision hoch ist, die Beleuchtungssteuereinheit die Lichteinstrahlung der Fahrzeug-Spotlampe derart steuert, dass die Fahrzeug-Spotlampe das Licht zu dem Objekt emittiert, während das Lichteinstrahlungsmuster des emittierten Lichts verändert wird.

6. System nach einem der Ansprüche 1 bis 5, wobei der Objektpositionsdetektor (134) ein Fußgängerpositionsdetektor ist, und die Objektposition-Erfassungssektion (156) eine Fußgängerposition-Erfassungssektion ist.

## Revendications

1. Système de lampe de véhicule (100) comprenant :
une lampe de véhicule (10) étant configurée pour être montée dans un véhicule et configurée pour émettre de la lumière vers une zone avant du véhicule et pour changer une direction d'irradiation de lumière et un motif d'irradiation de lumière de la lumière émise ;
un détecteur de position d'objet (134) configuré pour détecter une position d'un objet existant en face du véhicule ;
un capteur de vitesse du véhicule (124) configuré pour détecter la vitesse du véhicule ; et
un dispositif de commande de lampe de véhicule (150) comprenant :
une section d'acquisition de position d'objet (156) configurée pour acquérir une position d'un objet existant en face d'un véhicule ; et
un contrôleur d'éclairage (154) configuré pour contrôler une irradiation de lumière de la lampe de véhicule (10),
**caractérisé en ce que** la lampe de véhicule (10) comprend une pluralité d'éléments d'émission de lumière (24) et une lentille de projection (12),
la pluralité des éléments d'émission de lumière (24) sont disposés sur plusieurs lignes dans une direction verticale et sur plusieurs rangées dans une direction horizontale,
la surface d'émission de lumière de chacun de la pluralité d'éléments d'émission de lumière (24) est positionnée sur un plan focal arrière de la lentille de projection (12), et
le contrôleur d'éclairage (154) est configuré pour contrôler l'irradiation de lumière de la lampe de véhicule (10) en contrôlant l'éclairage des éléments d'émission de lumière respectifs (24) de façon à changer le motif d'irradiation de lumière de la lumière émise de sorte que la lampe de véhicule (10) émette la lumière vers l'objet tout en changeant le motif d'irradiation de lumière de la lumière émise, dans lequel le contrôle d'éclairage des éléments d'émission de lumière respectifs (24) comprend l'activation/la désactivation des éléments d'émission de lumière respectifs (24),
dans lequel le contrôleur d'éclairage (154) est configuré pour contrôler l'irradiation de lumière de la lampe de véhicule (10) de sorte que la lampe de véhicule (10) émette la lumière vers l'objet tout en changeant la largeur du motif d'irradiation de lumière, et
dans lequel le contrôleur d'éclairage (154) est configuré pour contrôler l'irradiation de lumière de la lampe de véhicule (10) de sorte que la lampe de véhicule (10) émette la lumière vers l'objet tout en augmentant et en diminuant de manière répétée la largeur du motif d'irradiation de lumière.

2. Système selon la revendication 1,
dans lequel le contrôleur d'éclairage (154) est configuré pour contrôler l'irradiation de lumière de la lampe de véhicule (10) de sorte que la lampe de véhicule (10) émette la lumière vers l'objet tout en changeant la longueur d'irradiation du motif d'irradiation de lumière dans une direction qui va du véhicule vers l'objet.

3. Système selon la revendication 1 ou 2,
dans lequel le contrôleur d'éclairage (154) est configuré pour contrôler l'irradiation de lumière de la lampe de véhicule (10) de sorte que le motif d'irradiation de lumière soit changé sur la base de la position de l'objet.

4. Système selon l'une quelconque des revendications 1 à 3, comprenant en outre :
une section d'acquisition de vitesse du véhicule (158) configurée pour acquérir la vitesse du véhicule ; et
une section de détermination de risque de collision (152) configurée pour déterminer le degré de risque de collision entre le véhicule et l'objet, sur la base de la position de l'objet et de la vitesse du véhicule, et
dans lequel le contrôleur d'éclairage (154) est configuré pour contrôler l'irradiation de lumière de la lampe de véhicule de sorte que le motif d'irradiation soit changé sur la base du degré de risque.

5. Système selon la revendication 4, dans lequel
si la section de détermination de risque de collision (152) détermine que le degré de risque de collision est élevé, le contrôleur d'éclairage contrôle l'irradiation de lumière de la lampe de véhicule de sorte que la lampe de véhicule émette la lumière vers l'objet tout en changeant le motif d'irradiation de lumière de la lumière émise.

6. Système selon l'une quelconque des revendications 1 à 5, dans lequel le détecteur de position d'objet (134) est un détecteur de position de piéton et la section d'acquisition de position d'objet (156) est une section d'acquisition de position de piéton.
